(19) Europäisches Patentamt
European Patent Office
Office européen des brevets

(11) EP 3 422 720 A1

(12) EUROPEAN PATENT APPLICATION

(43) Date of publication:
02.01.2019 Bulletin 2019/01

(51) Int Cl.:
H04N 19/567 (2014.01)    H04N 19/537 (2014.01)
H04N 19/52 (2014.01)

(21) Application number: 17305797.7

(22) Date of filing: 26.06.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• ROBERT, Antoine
  35576 Cesson-Sévigné (FR)
• LELEANNEC, Fabrice
  35576 Cesson-Sévigné (FR)
• POIRIER, Tangi
  35576 Cesson-Sévigné (FR)

(74) Representative: Huchet, Anne et al
InterDigital CE Patent Holdings
20, rue Rouget de Lisle
92130 Issy-les-Moulineaux (FR)

(54) MULTIPLE PREDICTOR CANDIDATES FOR MOTION COMPENSATION

(57) Different implementations are described, particularly implementations for selecting a predictor candidate from a set of multiple predictor candidates for motion compensation of a picture block based on a motion model. The motion model, may be, e.g., an affine model in a merge mode for a video content encoder or decoder. In an embodiment, a predictor candidate is selected from the set based on a motion model for each of the multiple predictor candidates, and may be based on a criterion such as, e.g., a rate distortion cost. The corresponding motion field is determined based on, e.g., one or more corresponding control point motion vectors for the block being encoded or decoded. The corresponding motion field of an embodiment identifies motion vectors used for prediction of sub-blocks of the block being encoded or decoded.

FIG. 18

**Description**

<u>TECHNICAL FIELD</u>

At least one of the present embodiments generally relates to, e.g., a method or an apparatus for video encoding or decoding, and more particularly, to a method or an apparatus for selecting a predictor candidate from a set of multiple predictor candidates for motion compensation based on a motion model such as, e.g., an affine model, for a video encoder or a video decoder.

<u>BACKGROUND</u>

To achieve high compression efficiency, image and video coding schemes usually employ prediction, including motion vector prediction, and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized, and entropy coded. To reconstruct the video, the compressed data are decoded by inverse processes corresponding to the entropy coding, quantization, transform, and prediction.

A recent addition to high compression technology includes using a motion model based on affine modeling. In particular, affine modeling is used for motion compensation for encoding and decoding of video pictures. In general, affine modeling is a model using at least two parameters such as, e.g., two control point motion vectors (CPMVs) representing the motion at the respective corners of a block of picture, that allows deriving a motion field for the whole block of a picture to simulate, e.g., rotation and homothety (zoom).

<u>SUMMARY</u>

According to a general aspect of at least one embodiment, a method for video encoding is presented, comprising: determining, for a block being encoded in a picture, a set of predictor candidates having multiple predictor candidates; selecting a predictor candidate from the set of predictor candidates; determining for the selected predictor candidate from the set of predictor candidates, one or more corresponding control point motion vectors for the block; determining for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded; encoding the block based on the corresponding motion field for the selected predictor candidate from the set of predictor candidates; and encoding an index for the selected predictor candidate from the set of predictor candidates.

According to another general aspect of at least one embodiment, a method for video decoding is presented, comprising: receiving, for a block being decoded in a picture, an index corresponding to a particular predictor candidate; determining, for the particular predictor candidate, one or more corresponding control point motion vectors for the block being decoded; determining for the particular predictor candidate, based on the one or more corresponding control point motion vectors, a corresponding motion field based on a motion model, wherein the corresponding motion field identifies motion vectors used for prediction of sub-blocks of the block being decoded; and decoding the block based on the corresponding motion field.

According to another general aspect of at least one embodiment, an apparatus for video encoding is presented, comprising: means for determining, for a block being encoded in a picture, a set of predictor candidates having multiple predictor candidates; means for selecting a predictor candidate from the set of predictor candidates; means for determining for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded; means for encoding the block based on the corresponding motion field for the selected predictor candidate from the set of predictor candidates; and means for encoding an index for the selected predictor candidate from the set of predictor candidates.

According to another general aspect of at least one embodiment, an apparatus for video decoding is presented, comprising: means for receiving, for a block being decoded in a picture, an index corresponding to a particular predictor candidate; means for determining, for the particular predictor candidate, one or more corresponding control point motion vectors for the block being decoded; means for determining for the particular predictor candidate, based on the one or more corresponding control point motion vectors, a corresponding motion field based on a motion model, wherein the corresponding motion field identifies motion vectors used for prediction of sub-blocks of the block being decoded; and means for decoding the block based on the corresponding motion field.

According to another general aspect of at least one embodiment, an apparatus for video encoding is provided, comprising: one or more processors, and at least one memory. Wherein the one or more processors is configured to:

determine, for a block being encoded in a picture, a set of predictor candidates having multiple predictor candidates; select a predictor candidate from the set of predictor candidates; determine for the selected predictor candidate from the set of predictor candidates, one or more corresponding control point motion vectors for the block; determine for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded; encode the block based on the corresponding motion field for the selected predictor candidate from the set of predictor candidates; and encode an index for the selected predictor candidate from the set of predictor candidates. The at least one memory is for storing, at least temporarily, the encoded block and/or the encoded index.

According to another general aspect of at least one embodiment, an apparatus for video decoding is provided, comprising: one or more processors and at least one memory. Wherein the one or more processors is configured to: receive, for a block being decoded in a picture, an index corresponding to a particular predictor candidate; determine, for the particular predictor candidate, one or more corresponding control point motion vectors for the block being decoded; determine for the particular predictor candidate, based on the one or more corresponding control point motion vectors, a corresponding motion field based on a motion model, wherein the corresponding motion field identifies motion vectors used for prediction of sub-blocks of the block being decoded; and decode the block based on the corresponding motion field. The at least one memory is for storing, at least temporarily, the decoded block.

According to a general aspect of at least one embodiment, a method for video encoding is presented, comprising: determining, for a block being encoded in a picture, a set of predictor candidates; determining for each of multiple predictor candidates from the set of predictor candidates, one or more corresponding control point motion vectors for the block; determining for each of the multiple predictor candidates, based on the one or more corresponding control point motion vectors, a corresponding motion field based on a motion model for the each of the multiple predictor candidates from the set of predictor candidates; evaluating the multiple predictor candidates according to one or more criteria and based on the corresponding motion field; selecting a predictor candidate from the multiple predictor candidates based on the evaluating; and encoding the block based on the selected predictor candidate from the set of predictor candidates.

According to a general aspect of at least one embodiment, a method for video decoding is presented, comprising retrieving, for a block being decoded in a picture, an index corresponding to a selected predictor candidate. Wherein the selected predictor candidate is selected at an encoder by: determining, for a block being encoded in a picture, a set of predictor candidates; determining for each of multiple predictor candidates from the set of predictor candidates, one or more corresponding control point motion vectors for the block being encoded; determining for each of the multiple predictor candidates, based on the one or more corresponding control point motion vectors, a corresponding motion field based on a motion model for the each of the multiple predictor candidates from the set of predictor candidates; evaluating the multiple predictor candidates according to one or more criteria and based on the corresponding motion field; selecting a predictor candidate from the multiple predictor candidates based on the evaluating; and encoding an index for the selected predictor candidate from the set of predictor candidates. The method further comprises decoding the block based on the index corresponding to the selected predictor candidate.

According to another general aspect of at least one embodiment, a method may further comprise: evaluating the multiple predictor candidates according to one or more criteria and based on corresponding motion fields for each of the multiple predictor candidates; and selecting the predictor candidate from the multiple predictor candidates based on the evaluating.

According to another general aspect of at least one embodiment, an apparatus may further comprise: means for evaluating the multiple predictor candidates according to one or more criteria and based on corresponding motion fields for each of the multiple predictor candidates; and means for selecting the predictor candidate from the multiple predictor candidates based on the evaluating.

According to another general aspect of at least one embodiment, the one or more criteria is based on a rate distortion determination corresponding to one or more of the multiple predictor candidates from the set of predictor candidates.

According to another general aspect of at least one embodiment, decoding or encoding the block based on the corresponding motion field comprises decoding or encoding, respectively, based on predictors for the sub-blocks, the predictors being indicated by the motion vectors.

According to another general aspect of at least one embodiment, the set of predictor candidates comprises spatial candidates, and/or temporal candidates, of the block being encoded or decoded.

According to another general aspect of at least one embodiment, the motion model is an affine model.

According to another general aspect of at least one embodiment, the corresponding motion field for each position (x, y) inside the block being encoded or decoded is determined by:

$$\begin{cases} v_x = \dfrac{(v_{1x} - v_{0x})}{w} x - \dfrac{(v_{1y} - v_{0y})}{w} y + v_{0x} \\[2ex] v_y = \dfrac{(v_{1y} - v_{0y})}{w} x + \dfrac{(v_{1x} - v_{0x})}{w} y + v_{0y} \end{cases}$$

wherein $(v_{0x}, v_{0y})$ and $(v_{1x}, v_{1y})$ are the control point motion vectors used to generate the corresponding motion field, $(v_{0x}, v_{0y})$ corresponds to the control point motion vector of the top-left corner of the block being encoded or decoded, $(v_{1x}, v_{1y})$ corresponds to the control point motion vector of the top-right corner of the block being encoded or decoded and w is the width of the block being encoded or decoded.

According to another general aspect of at least one embodiment, the number of the spatial candidates is at least 5.

According to another general aspect of at least one embodiment, one or more additional control point motion vectors are added for the determining of the corresponding motion field based on a function of the determined one or more corresponding control point motion vectors.

According to another general aspect of at least one embodiment, the function includes one or more of: 1) mean, 2) weighted mean, 3) unique mean, 4) average, 5) median, or 6) uni-directional part of one of the 1) to 6) above, of the determined one or more corresponding control point motion vectors.

According to another general aspect of at least one embodiment, a non-transitory computer readable medium is presented containing data content generated according to the method or the apparatus of any of the preceding descriptions.

According to another general aspect of at least one embodiment, a signal is provided comprising video data generated according to the method or the apparatus of any of the preceding descriptions.

One or more of the present embodiments also provide a computer readable storage medium having stored thereon instructions for encoding or decoding video data according to any of the methods described above. The present embodiments also provide a computer readable storage medium having stored thereon a bitstream generated according to the methods described above. The present embodiments also provide a method and apparatus for transmitting the bitstream generated according to the methods described above. The present embodiments also provide a computer program product including instructions for performing any of the methods described.

BRIEF DESCRIPTION OF THE DRAWINGS

FIG. 1 illustrates a block diagram of an embodiment of an HEVC (High Efficiency Video Coding) video encoder.

FIG. 2A is a pictorial example depicting HEVC reference sample generation.

FIG. 2B is a pictorial example depicting intra prediction directions in HEVC.

FIG. 3 illustrates a block diagram of an embodiment of an HEVC video decoder.

FIG. 4 illustrates an example of Coding Tree Unit (CTU) and Coding Tree (CT) concepts to represent a compressed HEVC picture.

FIG. 5 illustrates an example of divisions of a Coding Tree Unit (CTU) into Coding Units (CUs), Prediction Units (PUs), and Transform Units (TUs).

FIG. 6 illustrates an example of an affine model as the motion model used in Joint Exploration Model (JEM).

FIG. 7 illustrates an example of 4x4 sub-CU based affine motion vector field used in Joint Exploration Model (JEM).

FIG. 8A illustrates an examples of motion vector prediction candidates for Affine Inter CUs.

FIG. 8B illustrates an example of motion vector prediction candidates in the Affine Merge mode.

FIG. 9 illustrates an example of spatial derivation of affine control point motion vectors in the case of Affine Merge mode motion model.

FIG. 10 illustrates an example method according to a general aspect of at least one embodiment.

FIG. 11 illustrates another example method according to a general aspect of at least one embodiment.

FIG. 12 also illustrates another example method according to a general aspect of at least one embodiment.

FIG. 13 also illustrates another example method according to a general aspect of at least one embodiment.

FIG. 14 illustrate an example of a known process/syntax for evaluating the Affine Merge mode of an inter-CU in JEM.

FIG. 15 illustrates an example of a process/syntax for choosing the predictor candidate in the Affine Merge mode in JEM.

FIG. 16 illustrates an example of propagated affine motion fields through an Affine Merge predictor candidate located to the left of the current block being encoded or decoded.

FIG. 17 illustrates an example of propagated affine motion fields through an Affine Merge predictor candidate located to the top and right of the current block being encoded or decoded.

FIG. 18 illustrates an example of a predictor candidate selection process/syntax according to a general aspect of at least one embodiment.

FIG. 19 illustrates an example of a process/syntax to build a set of multiple predictor candidates according to a general aspect of at least one embodiment.

FIG. 20 illustrates an example of a derivation process/syntax of top-left and top-right corner CPMVs for each predictor candidate according to a general aspect of at least one embodiment.

FIG. 21 illustrates an example of an augmented set of spatial predictor candidates according to a general aspect of at least one embodiment.

FIG. 22 illustrates another example of a process/syntax to build a set of multiple predictor candidates according to a general aspect of at least one embodiment.

FIG. 23 also illustrates another example of a process/syntax to build a set of multiple predictor candidates according to a general aspect of at least one embodiment.

FIG. 24 illustrates an example of how temporal candidates may be used for predictor candidates according to a general aspect of at least one embodiment.

FIG. 25 illustrates an example of a process/syntax of adding the mean CPMV motion vectors computed of the stored CPMV candidate to the final CPMV candidate set according to a general aspect of at least one embodiment.

FIG. 26 illustrates a block diagram of an example apparatus in which various aspects of the embodiments may be implemented.

DETAILED DESCRIPTION

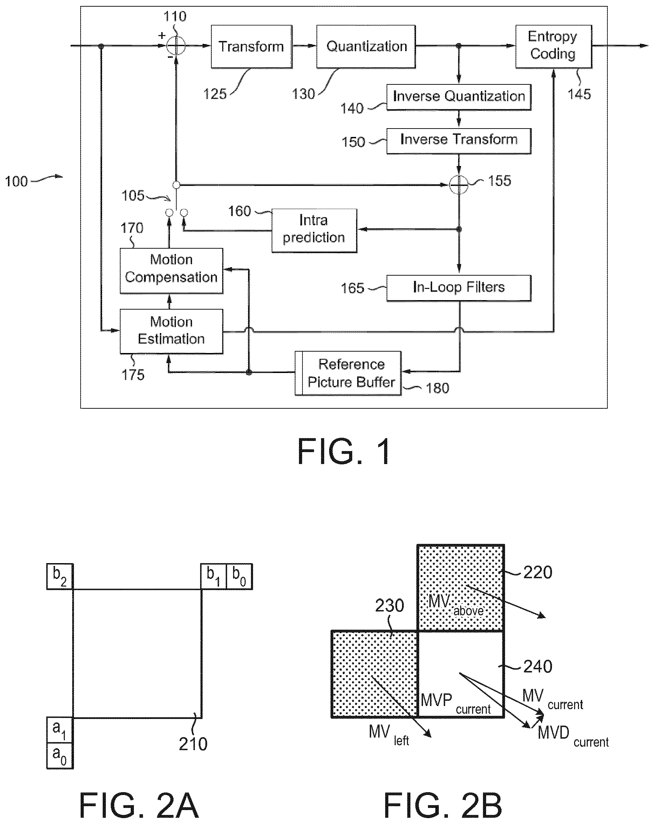

FIG. 1 illustrates an exemplary High Efficiency Video Coding (HEVC) encoder 100. HEVC is a compression standard developed by Joint Collaborative Team on Video Coding (JCT-VC) (see, e.g., "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265").
In HEVC, to encode a video sequence with one or more pictures, a picture is partitioned into one or more slices where each slice can include one or more slice segments. A slice segment is organized into coding units, prediction units, and transform units.

**EP 3 422 720 A1**

In the present application, the terms "reconstructed" and "decoded" may be used interchangeably, the terms "encoded" or "coded" may be used interchangeable, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar, and 33 angular prediction modes. The intra prediction reference is reconstructed from the row and column adjacent to the current block. The reference extends over two times the block size in the horizontal and vertical directions using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)".

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

The set of possible candidates in the merge mode consists of spatial neighbor candidates, a temporal candidate, and generated candidates. FIG. 2A shows the positions of five spatial candidates $\{a_1, b_1, b_0, a_0, b_2\}$ for a current block 210, wherein $a_0$ and $a_1$ are to the left of the current block, and $b_1, b_0, b_2$ are at the top of the current block. For each candidate position, the availability is checked according to the order of $a_1, b_1, b_0, a_0, b_2$, and then the redundancy in candidates is removed.

The motion vector of the collocated location in a reference picture can be used for derivation of a temporal candidate. The applicable reference picture is selected on a slice basis and indicated in the slice header, and the reference index for the temporal candidate is set to $i_{ref} = 0$. If the POC distance (td) between the picture of the collocated PU and the reference picture from which the collocated PU is predicted from, is the same as the distance (tb) between the current picture and the reference picture containing the collocated PU, the collocated motion vector $mv_{col}$ can be directly used as the temporal candidate. Otherwise, a scaled motion vector, tb/td*$mv_{col}$, is used as the temporal candidate. Depending on where the current PU is located, the collocated PU is determined by the sample location at the bottom-right or at the center of the current PU.

The maximum number of merge candidates, N, is specified in the slice header. If the number of merge candidates is larger than N, only the first N - 1 spatial candidates and the temporal candidate are used. Otherwise, if the number of merge candidates is less than N, the set of candidates is filled up to the maximum number N with generated candidates as combinations of already present candidates, or null candidates. The candidates used in the merge mode may be referred to as "merge candidates" in the present application.

If a CU indicates a skip mode, the applicable index for the merge candidate is indicated only if the list of merge candidates is larger than 1, and no further information is coded for the CU. In the skip mode, the motion vector is applied without a residual update.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

Only two spatial motion candidates are chosen in AMVP. The first spatial motion candidate is chosen from left positions $\{a_0, a_1\}$ and the second one from the above positions $\{b_0, b_1, b_2\}$, while keeping the searching order as indicated in the two sets. If the number of motion vector candidates is not equal to two, the temporal MV candidate can be included. If the set of candidates is still not fully filled, then zero motion vectors are used.

If the reference picture index of a spatial candidate corresponds to the reference picture index for the current PU (i.e., using the same reference picture index or both using long-term reference pictures, independently of the reference picture list), the spatial candidate motion vector is used directly. Otherwise, if both reference pictures are short-term ones, the candidate motion vector is scaled according to the distance (tb) between the current picture and the reference picture of the current PU and the distance (td) between the current picture and the reference picture of the spatial candidate. The candidates used in the AMVP mode may be referred to as "AMVP candidates" in the present application.

For ease of notation, a block tested with the "merge" mode at the encoder side or a block decoded with the "merge" mode at the decoder side is denoted as a "merge" block, and a block tested with the AMVP mode at the encoder side or a block decoded with the AMVP mode at the decoder side is denoted as an "AMVP" block.

FIG. 2B illustrates an exemplary motion vector representation using AMVP. For a current block 240 to be encoded, a motion vector ($MV_{current}$) can be obtained through motion estimation. Using the motion vector ($MV_{left}$) from a left block 230 and the motion vector ($MV_{above}$) from the above block 220, a motion vector predictor can be chosen from $MV_{left}$ and $MV_{above}$ as $MVP_{current}$. A motion vector difference then can be calculated as $MVD_{current} = MV_{current} - MVP_{current}$.

Motion compensation prediction can be performed using one or two reference pictures for prediction. In P slices, only a single prediction reference can be used for Inter prediction, enabling uni-prediction for a prediction block. In B slices, two reference picture lists are available, and uni-prediction or bi-prediction can be used. In bi-prediction, one reference picture from each of the reference picture lists is used.

In HEVC, the precision of the motion information for motion compensation is one quarter-sample (also referred to as quarter-pel or 1/4-pel) for the luma component and one eighth-sample (also referred to as 1/8-pel) for the chroma components for the 4:2:0 configuration. A 7-tap or 8-tap interpolation filter is used for interpolation of fractional-sample positions, i.e., 1/4, 1/2 and 3/4 of full sample locations in both horizontal and vertical directions can be addressed for luma.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

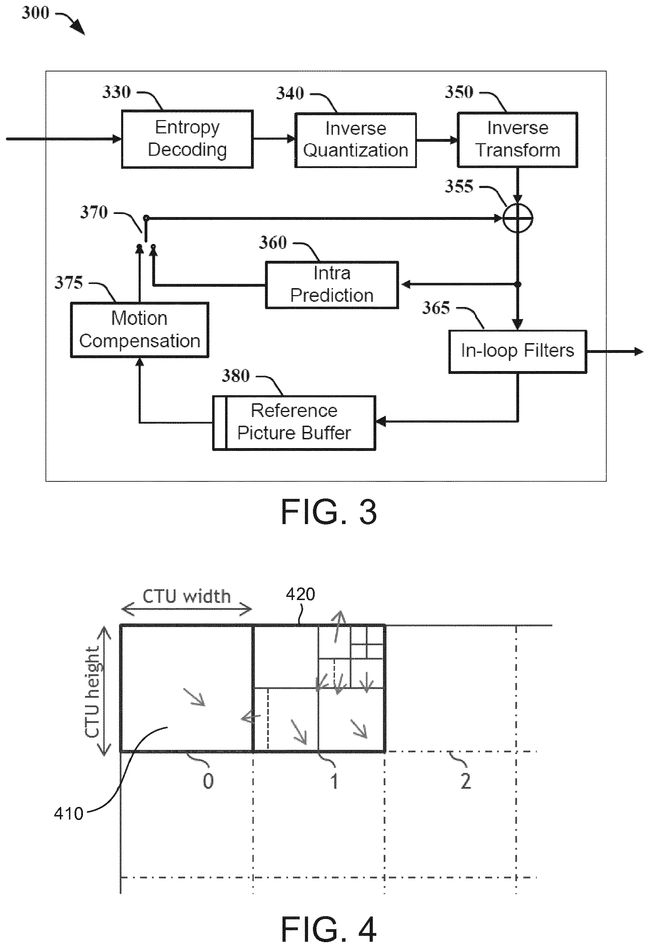

FIG. 3 illustrates a block diagram of an exemplary HEVC video decoder 300. In the exemplary decoder 300, a bitstream is decoded by the decoder elements as described below. Video decoder 300 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (330) to obtain transform coefficients, motion vectors, and other coded information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). As described above, AMVP and merge mode techniques may be used to derive motion vectors for motion compensation, which may use interpolation filters to calculate interpolated values for sub-integer samples of a reference block. In-loop filters (365) are applied to the reconstructed image. The filtered image is stored at a reference picture buffer (380).

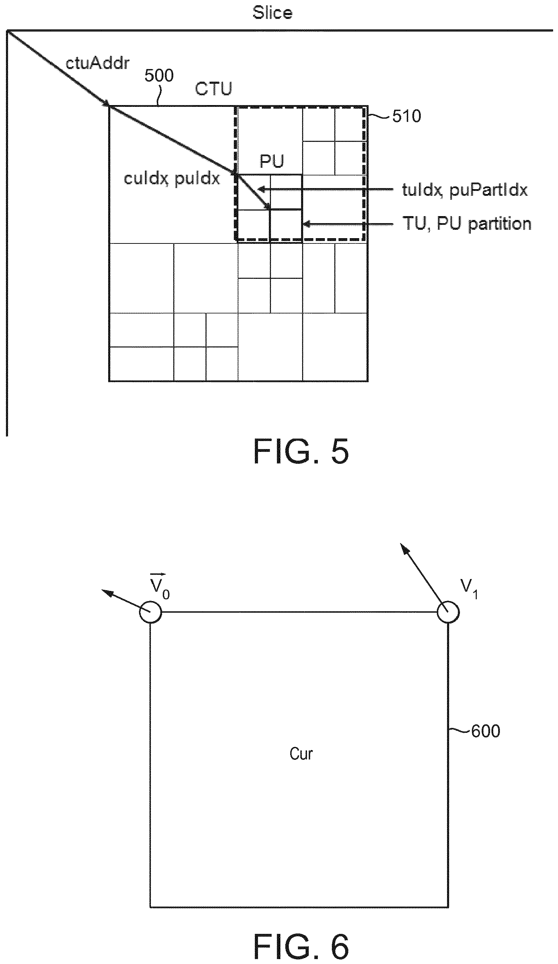

As mentioned, in HEVC, motion compensated temporal prediction is employed to exploit the redundancy that exists between successive pictures of a video. To do that, a motion vector is associated with each prediction unit (PU). As explained above, each CTU is represented by a Coding Tree in the compressed domain. This is a quad-tree division of the CTU, where each leaf is called a Coding Unit (CU) and is also illustrated in FIG. 4 for CTUs 410 and 420. Each CU is then given some Intra or Inter prediction parameters as prediction information. To do so, a CU may be spatially partitioned into one or more Prediction Units (PUs), each PU being assigned some prediction information. The Intra or Inter coding mode is assigned on the CU level. These concepts are further illustrated in FIG. 5 for an exemplary CTU 500 and a CU 510.

In HEVC, one motion vector is assigned to each PU. This motion vector is used for motion compensated temporal prediction of the considered PU. Therefore, in HEVC, the motion model that links a predicted block and its reference block simply consists of a translation or calculation based on the reference block and the corresponding motion vector.

To make improvements to HEVC, the reference software and/or documentation JEM (Joint Exploration Model) is being developed by the Joint Video Exploration Team (JVET). In one JEM version (e.g., "Algorithm Description of Joint Exploration Test Model 5", Document JVET-E1001_v2, Joint Video Exploration Team of ISO/IEC JTC1/SC29/WG11, 5rd meeting, 12-20 January 2017, Geneva, CH), some further motion models are supported to improve temporal prediction. To do so, a PU can be spatially divided into sub-PUs and a model can be used to assign each sub-PU a dedicated motion vector.

In more recent versions of the JEM (e.g., "Algorithm Description of Joint Exploration Test Model 2", Document JVET-B1001_v3, Joint Video Exploration Team of ISO/IEC JTC1/SC29/WG11, 2rd meeting, 20-26 February 2016, San Diego, USA"), a CU is no longer specified to be divided into PUs or TUs. Instead, more flexible CU sizes may be used, and some motion data are directly assigned to each CU. In this new codec design under the newer versions of JEM, a CU may be divided into sub-CUs and a motion vector may be computed for each sub-CU of the divided CU.

One of the new motion models introduced in the JEM is the use of an affine model as the motion model to represent the motion vectors in a CU. The motion model used is illustrated by FIG. 6 and is represented by Equation 1 as shown below. The affine motion field comprises the following motion vector component values for each position (x, y) inside the considered block 600 of FIG. 6:

$$
\begin{cases}
v_x = \dfrac{(v_{1x} - v_{0x})}{w}x - \dfrac{(v_{1y} - v_{0y})}{w}y + v_{0x} \\[2ex]
v_y = \dfrac{(v_{1y} - v_{0y})}{w}x + \dfrac{(v_{1x} - v_{0x})}{w}y + v_{0y}
\end{cases}
$$

**Equation 1**: affine motion model used to generate the motion field inside a CU for prediction,

wherein $(v_{0x}, v_{0y})$ and $(v_{1x}, v_{1y})$ are the control point motion vectors used to generate the corresponding motion field, $(v_{0x}, v_{0y})$ corresponds to the control point motion vector of the top-left corner of the block being encoded or decoded, $(v_{1x}, v_{1y})$ corresponds to the control point motion vector of the top-right corner of the block being encoded or decoded, and w is the width of the block being encoded or decoded.

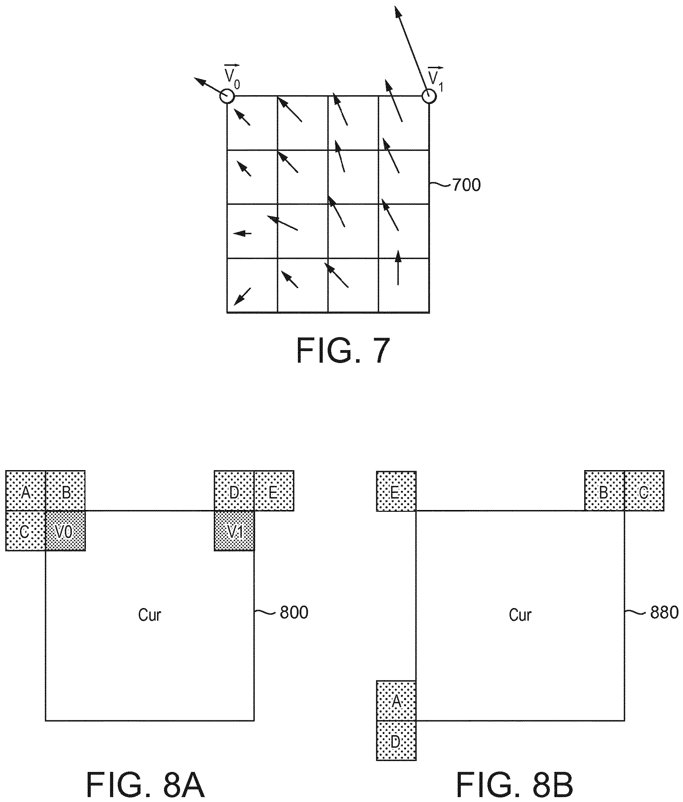

To reduce complexity, a motion vector is computed for each 4x4 sub-block (sub-CU) of the considered CU 700, as illustrated in FIG. 7. An affine motion vector is computed from the control point motion vectors, for each center position of each sub-block. The obtained MV is represented at 1/16 pel accuracy. As a result, the compensation of a coding unit in the affine mode consists in motion compensated prediction of each sub-block with its own motion vector. These motion vectors for the sub-blocks are shown respectively as an arrow for each of the sub-blocks in FIG. 7.

Affine motion compensation may be used in 2 ways in the JEM: Affine Inter (AF_INTER) mode and Affine Merge mode. They are introduced in the following sections.

Affine Inter (AF_INTER) mode: A CU in AMVP mode, whose size is larger than 8x8, may be predicted in Affine Inter mode. This is signaled through a flag in the bit-stream. The generation of the Affine Motion Field for that inter CU includes determining control point motion vectors (CPMVs), which are obtained by the decoder through the addition of a motion vector differential and a control point motion vector prediction (CPMVP). The CPMVPs are a pair of motion vector candidates, respectively taken from the set (A, B, C) and (D, E) illustrated in FIG. 8A for a current CU 800 being encoded or decoded.

Affine Merge mode: In Affine Merge mode, a CU-level flag indicates if a merge CU employs affine motion compensation. If so, then the first available neighboring CU that has been coded in an Affine mode is selected among the ordered set of candidate positions A, B, C, D, E of FIG. 8B for a current CU 880 being encoded or decoded. Note that this ordered set of candidate positions in JEM is the same as the spatial neighbor candidates in the merge mode in HEVC as shown in FIG. 2A and as explained previously.

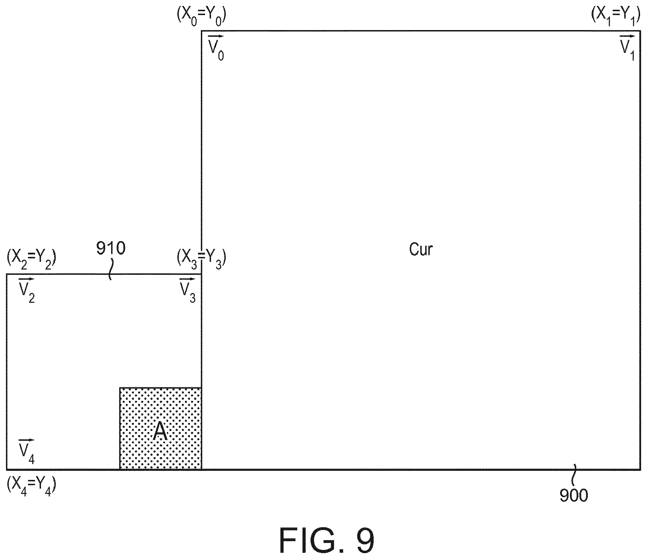

Once the first neighboring CU in Affine mode is obtained, then the 3 CPMVs $\vec{v_2}$, $\vec{v_3}$, and $\vec{v_4}$ from the top-left, top-right and bottom-left corners of the neighboring affine CU are retrieved or calculated. For example, FIG. 9 shows that this first determined neighboring CU 910 in Affine mode being in the A position of FIG. 8B for a current CU 900 being encoded or decoded. Based on these three CPMVs of the neighboring CU 910, the two CPMVs of the top-left and top-right corners of the current CU 900 are derived as follows:

$$\vec{v_0} = \vec{v_2} + (\vec{v_4} - \vec{v_2})\left(\frac{Y_{curr} - Y_{neighb}}{H_{neighb}}\right) + (\vec{v_3} - \vec{v_2})\left(\frac{X_{curr} - X_{neighb}}{W_{neighb}}\right)$$

$$\vec{v_1} = \vec{v_0} + (\vec{v_3} - \vec{v_2})\left(\frac{W_{curr}}{W_{neighb}}\right)$$

**Equation 2**: derivation of CPMVs of the current CU based on the three control-point motion vectors of the selected neighboring CU

When the control point motion vectors $\vec{v_0}$ and $\vec{v_1}$ of the current CU are obtained, the motion field inside the current CU being encoded or decoded is computed on a 4x4 sub-CU basis, through the model of Equation 1 as described above in connection with FIG. 6.

Accordingly, a general aspect of at least one embodiment aims to improve the performance of the Affine Merge mode in JEM so that the compression performance of a considered video codec may be improved. Therefore, in at least one embodiment, an augmented and improved affine motion compensation apparatus and method are presented, for example, for Coding Units that are coded in Affine Merge mode. The proposed augmented and improved affine mode includes evaluating multiple predictor candidates in the Affine Merge mode.

As discussed before, in the current JEM, the first neighboring CU coded in Affine Merge mode among the surrounding CUs is selected to predict the affine motion model associated with the current CU being encoded or decoded. That is, the first neighboring CU candidate among the ordered set (A, B, C, D, E) of FIG. 8B that is coded in affine mode is selected to predict the affine motion model of current CU.

Accordingly, at least one embodiment selects the Affine Merge prediction candidate that provides the best coding efficiency when coding the current CU in Affine Merge mode, instead of using just the first one in the ordered set as noted above. The improvements of this embodiment, at a general level, therefore comprise, for example:

- constructing a set of multiple Affine Merge predictor candidates that is likely to provide a good set of candidates for the prediction of an affine motion model of a CU (for encoder/decoder);
- selecting one predictor for the current CU's control point motion vector among the constructed set (for encoder/decoder); and/or
- signaling/decoding the index of current CU's control point motion vector predictor (for encoder/decoder).

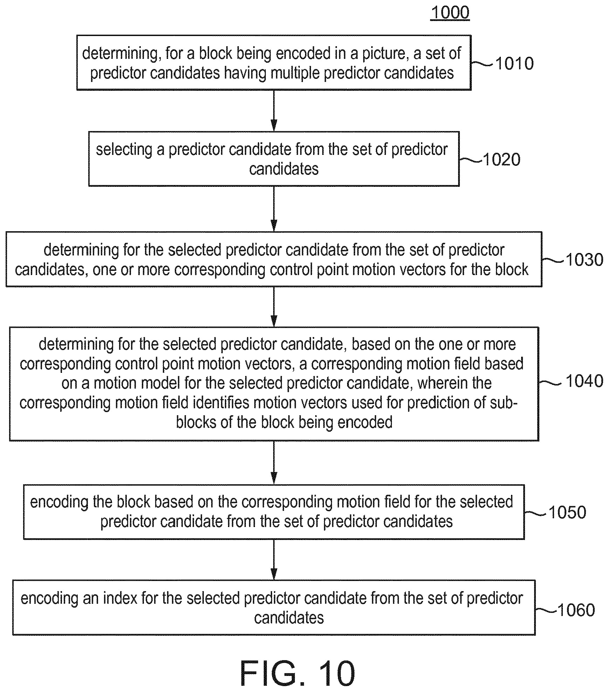

Accordingly, FIG. 10 illustrates an exemplary encoding method 1000 according to a general aspect of at least one embodiment. At 1010, the method 1000 determines, for a block being encoded in a picture, a set of predictor candidates having multiple predictor candidates. At 1020, the method 1000 selects a predictor candidate from the set of predictor candidates. At 1030, the method 1000 determines for the selected predictor candidate from the set of predictor candidates, one or more corresponding control point motion vectors for the block. At 1040, the method 1000 determines for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded. At 1050, the method 1000 encodes the block based on the corresponding motion field for the selected predictor candidate from the set of predictor candidates. At 1060, the method 1000 encodes an index for the selected predictor candidate from the set of predictor candidates.

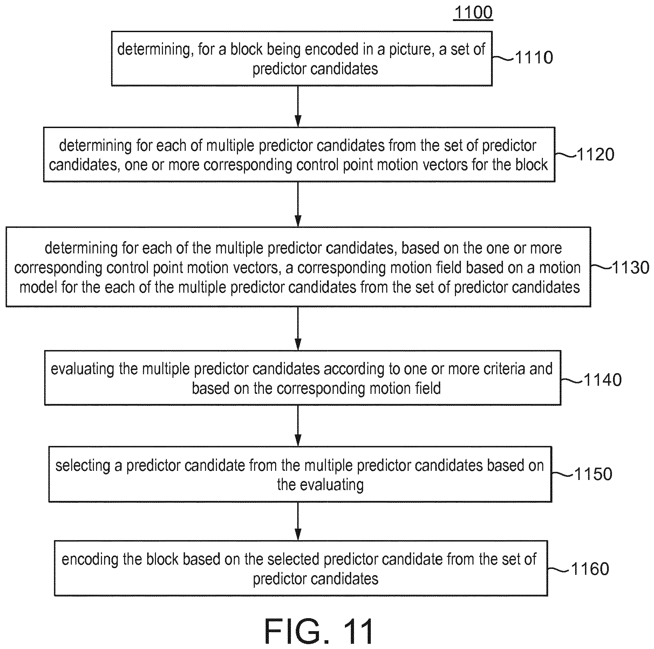

FIG. 11 illustrates another exemplary encoding method 1100 according to a general aspect of at least one embodiment. At 1110, the method 1100 determines, for a block being encoded in a picture, a set of predictor candidates. At 1120, the method 1100 determines for each of multiple predictor candidates from the set of predictor candidates, one or more corresponding control point motion vectors for the block. At 1130, the method 1100 determines for each of the multiple predictor candidates, based on the one or more corresponding control point motion vectors, a corresponding motion field based on a motion model for the each of the multiple predictor candidates from the set of predictor candidates. At 1140, the method 1100 evaluates the multiple predictor candidates according to one or more criteria and based on the corresponding motion field. At 1150, the method 1100 selects a predictor candidate from the multiple predictor candidates based on the evaluating. At 1160, the method 1100 encodes an index for the selected predictor candidate from the set of predictor candidates.

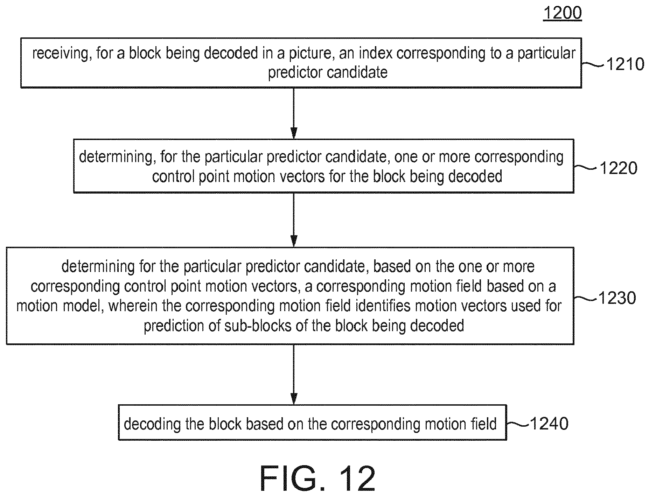

FIG. 12 illustrates an exemplary decoding method 1200 according to a general aspect of at least one embodiment. At 1210, the method 1200 receives, for a block being decoded in a picture, an index corresponding to a particular predictor candidate. In various embodiments, the particular predictor candidate has been selected at an encoder, and the index allows one of multiple predictor candidates to be selected. At 1220, the method 1200 determines, for the particular predictor candidate, one or more corresponding control point motion vectors for the block being decoded. At 1230, the method 1200 determines for the particular predictor candidate, based on the one or more corresponding control point motion vectors, a corresponding motion field. In various embodiments, the motion field is based on a motion model, wherein the corresponding motion field identifies motion vectors used for prediction of sub-blocks of the block being decoded. At 1240, the method 1200 decodes the block based on the corresponding motion field.

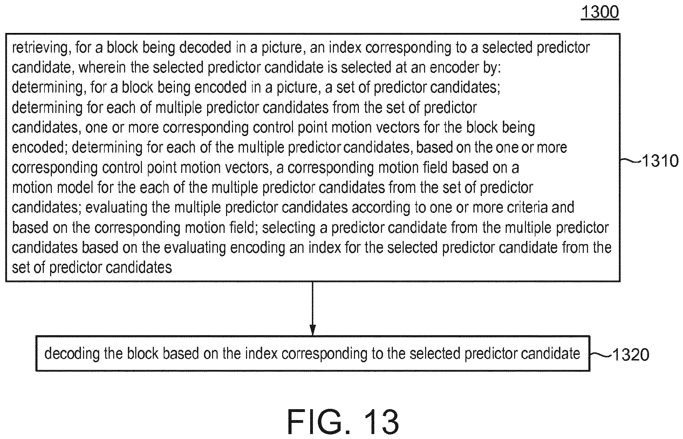

FIG. 13 illustrates another exemplary decoding method 1300 according to a general aspect of at least one embodiment. At 1310, the method 1300 retrieves, for a block being decoded in a picture, an index corresponding a selected predictor candidate. As also shown at 1310, the selected predictor candidate has been selected at an encoder by: determining, for a block being encoded in a picture, a set of predictor candidates; determining for each of multiple predictor candidates from the set of predictor candidates, one or more corresponding control point motion vectors for the block being encoded; determining for each of the multiple predictor candidates, based on the one or more corresponding control point motion vectors, a corresponding motion field based on a motion model for the each of the multiple predictor candidates from the set of predictor candidates; evaluating the multiple predictor candidates according to one or more criteria and based on the corresponding motion field; selecting a predictor candidate from the multiple predictor candidates based on the evaluating; and encoding an index for the selected predictor candidate from the set of predictor candidates. At 1320, the method 1300 decodes the block based on the index corresponding to the selected predictor candidate.

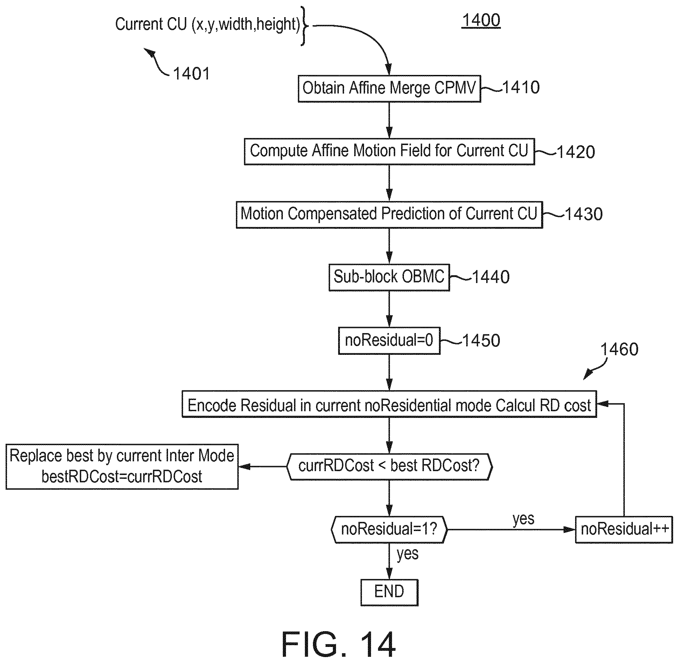

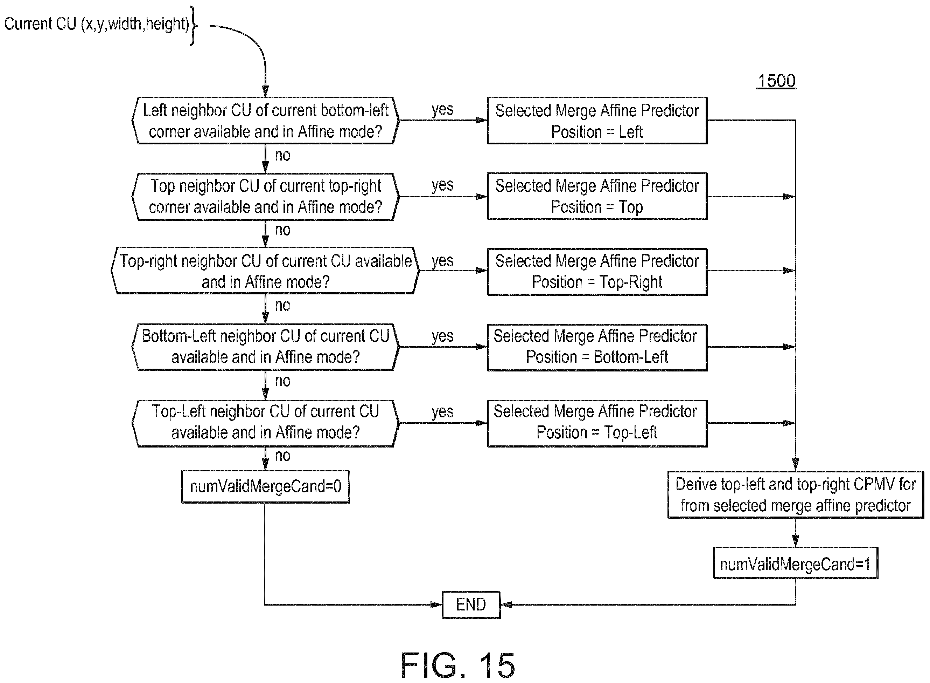

FIG. 14 illustrates the detail of an embodiment of a process/syntax 1400 used to predict the affine motion field of a current CU being encoded or decoded in the existing Affine Merge mode in JEM. The input 1401 to this process/syntax 1400 is the current Coding Unit for which one wants to generate the affine motion field of the sub-blocks as shown in FIG. 7. At 1410, the Affine Merge CPMVs for the current block are obtained with the selected predictor candidate as explained above in connection with, e.g., FIG. 6, FIG. 7, FIG. 8B, and FIG. 9. The derivation of this predictor candidate is also explained in more detail later with respect to FIG. 15.

As a result, at 1420, the top-left and top-right control point motion vectors $\vec{v_0}$ and $\vec{v_1}$ are then used to compute the affine motion field associated with the current CU. This consists in computing a motion vector for each 4x4 sub-block according to Equation 1 as explained before. At 1430 and 1440, once the motion field is obtained for the current CU, the temporal prediction of the current CU takes place, involving 4x4 sub-block based motion compensation and then OBMC (Overlapped Block Motion Compensation). At 1450 and 1460, the current CU is coded and reconstructed, successively with and without residual data. For example, at 1450, the current CU is first coded using intra mode with no residual coding. At 1460, the best way to encode the current CU (e.g., the way having minimum rate distortion cost), is then selected, which provides the coding of the current CU in the Affine Merge mode. The Affine Merge coding mode is then put in a rate distortion (RD) competition with other coding modes (including e.g., inter mode with residual coding) available for the current CU in the considered video coding system. A mode is selected based on the RD competition, and that mode is used to encode the current CU, and an index for that mode is also encoded in various embodiments.

In at least one implementation, a residual flag is used. At 1450, a flag is activated indicating that the coding is done with residual data. At 1460, the current CU is fully coded and reconstructed (with residual) giving the corresponding RD cost. Then the flag is deactivated indicating that the coding is done without residual data, and the process goes back to 1460 where the CU is coded (without residual) giving the corresponding RD cost. The lowest RD cost between the two previous ones indicates if residual must be coded or not (normal or skip). Then this best RD cost is put in competition with other coding modes. Rate distortion determination will be explained in more detail below.

FIG. 15 shows the detail of an embodiment of a process/syntax 1500 used to predict the one or more control points of the current CU's affine motion field. This consists in searching a CU that has been coded/decoded in Affine mode, among the spatial positions (A, B, C, D, E) of FIG. 8B. The first position that corresponds to a CU in Affine mode is selected. The process/syntax 1500 then consists in computing control point motion vectors that will be used later to generate the affine motion field assigned to the current CU. This control point computation proceeds as follows. The CU that contains the selected position is determined. It is one of the neighbor CUs of current CU as explained before. Next,

the 3 CPMVs $\vec{v_2}$, $\vec{v_3}$, and $\vec{v_4}$ from the top-left, top-right and bottom-left corners inside the selected neighbor CU are retrieved (or determined) as explained before in connection with FIG. 9. Finally, the top-left and top-right CPMVs $\vec{v_0}$, and $\vec{v_1}$ of the current CU are derived, according to Equation 1, as explained before in connection with FIG. 6.

The present inventors have recognized that one aspect of the existing Affine Merge process described above is that it systematically employs one and only one motion vector predictor to propagate an affine motion field from a surrounding past and neighboring CU towards a current CU. In various situations, the present inventors have further recognized that this aspect can be disadvantageous because, for example, it does not select the optimal motion vector predictor. Moreover, the choice of this predictor consists only of the first past and neighboring CU coded in Affine mode, in the ordered set (A, B, C, D, E), as already noted before. In various situations, the present inventors have further recognized that this limited choice can be disadvantageous because, for example, a better predictor might be available. Therefore, the existing process in the current JEM does not consider the fact that several potential past and neighboring CUs around the current CU may also have used affine motion, and that a different CU other than the first one found to have used affine motion may be a better predictor for the current CU's motion information.

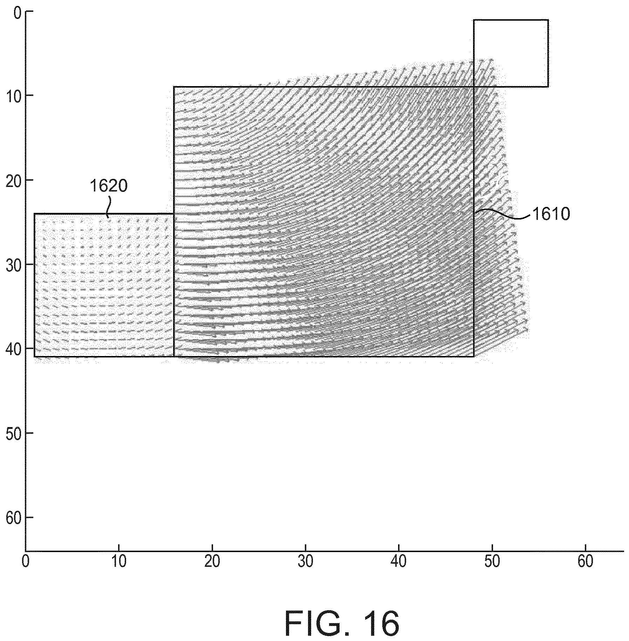

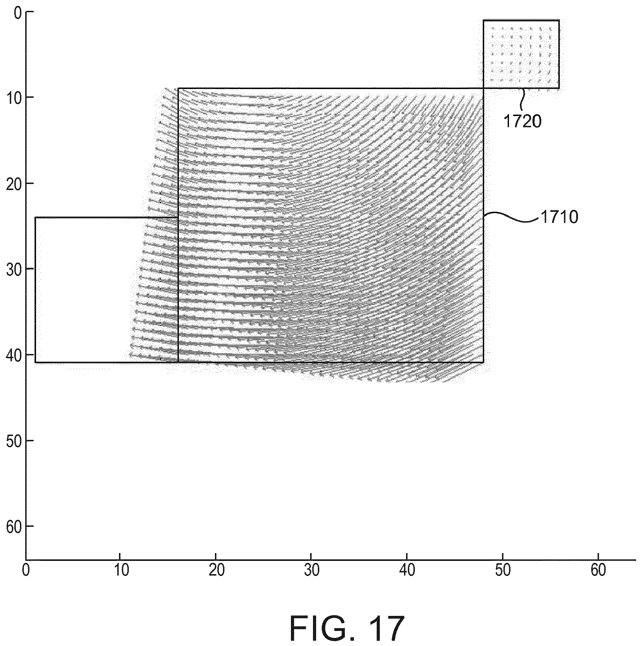

Therefore, the present inventors have recognized the potential advantages in several ways to improve the prediction of the current CU affine motion vectors that are not being exploited by the existing JEM codecs. According to a general aspect of at least one embodiment, such advantages provided in the present motion models may be seen and are illustrated in FIG. 16 and FIG. 17, as explained below.

In both FIG. 16 and FIG. 17, the current CU being encoded or decoded is the large one in the middle, respectively, 1610 in FIG. 16 and 1710 in FIG. 17. The two potential predictor candidates correspond to positions A and C of FIG. 8B, and are shown respectively as predictor candidates 1620 in FIG. 16 and 1720 in FIG. 17. In particular, FIG. 16 illustrates the potential motion fields of the current block 1610 being coded or decoded if the selected predictor candidate is located on the left position (position A of FIG. 8B). Likewise, FIG. 17 illustrates the potential motion fields of the current block 1710 being coded or decoded if the selected predictor candidate is located on the right and top position (i.e., position C of FIG. 8B). As shown in the illustrative figures, depending on which Affine Merge predictor is chosen, different sets of motion vectors for the sub-blocks may be generated for the current CU. Therefore, the present inventors recognize that one or more criteria such as e.g., a Rate Distortion (RD) optimized choice between these two candidates may help in improving the coding/decoding performance of the current CU in Affine Merge mode.

Therefore, one general aspect of at least one embodiment consists in selecting a better motion predictor candidate to derive the CPMV of a current CU being encoded or decoded, among a set of multiple candidates. On the encoder side, the candidate used to predict the current CPMV is chosen according to a rate distortion cost criteria, according to one aspect of one exemplary embodiment. Its index is then coded in the output bit-stream for the decoder, according to another aspect of another exemplary embodiment.

According to another aspect of another exemplary embodiment, in the decoder, the set of candidates may be built, and a predictor may be selected from the set, in the same way as on the encoder side. In such an embodiment, no index needs to be coded in the output bit-stream. Another embodiment of the decoder avoids building the set of candidates, or at least avoids selecting a predictor from the set as in the encoder, and simply decodes the index corresponding to the selected candidate from the bit-stream to derive the corresponding relevant data.

According to another aspect of another exemplary embodiment, CPMVs used herewith are not limited to the two at the top-right and top-left positions of the current CU being coded or decoded, as shown in FIG. 6. Other embodiments comprise, e.g., only one vector or more than two vectors, and the positions of these CPMVs are e.g., at other corner positions, or at any positions in or out of the current block, as long as it is possible to derive a motion field such as, e.g., at the position(s) of the center of the corner 4x4 sub-blocks, or the internal corner of the corner 4x4 sub-blocks.

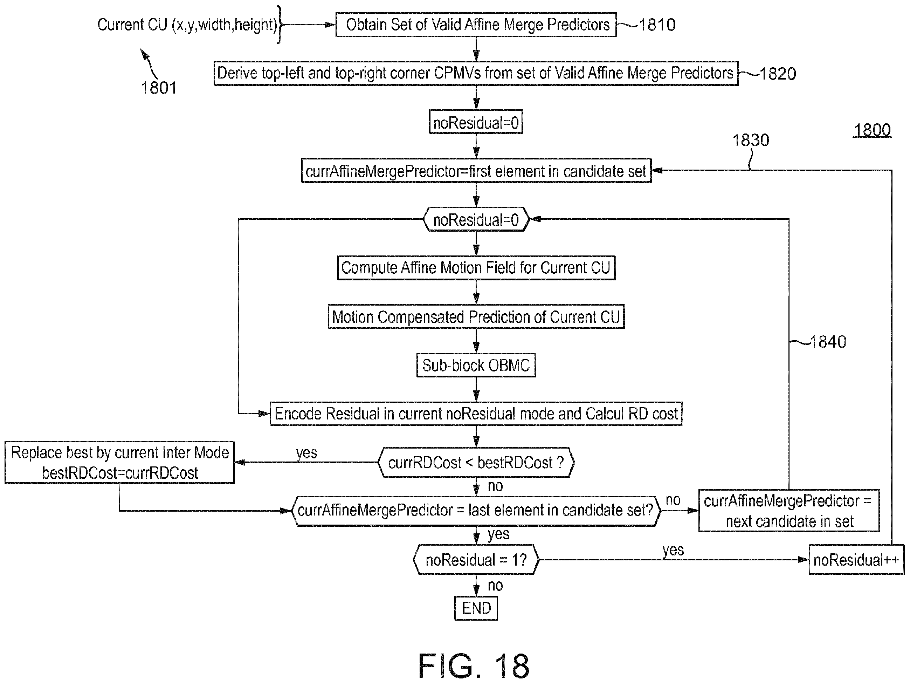

In an exemplary embodiment, the set of potential candidate predictors being investigated is identical to the set of positions (A, B, C, D, E) used to retrieve the CPMV predictor in the existing Affine Merge mode in JEM, as illustrated in FIG. 8B. FIG. 18 illustrates the details of one exemplary selection process/syntax 1800 for selecting the best candidate to predict a current CU's affine motion model according to a general aspect of this embodiment. However, other embodiments use a set of predictor positions that is different from A, B, C, D, E, and that can include fewer or more elements in the set.

As shown at 1801, the input to this exemplary embodiment 1800 is also information of the current CU being encoded or decoded. At 1810, a set of multiple Affine Merge predictor candidates is built, according to the algorithm 1500 of FIG. 15, which was explained before. Algorithm 1500 of FIG. 15 includes gathering all neighboring positions (A, B, C, D, E) shown in FIG. 8A that corresponds to a past CU which has been coded in Affine mode, into a set of candidates for the prediction of current CU affine motion. Thus, instead of stopping when a past affine CU is found, the process/syntax 1800 stores all possible candidates for the affine motion model propagation from a past CU to the current CU for all of the multiple motion predictor candidates in the set.

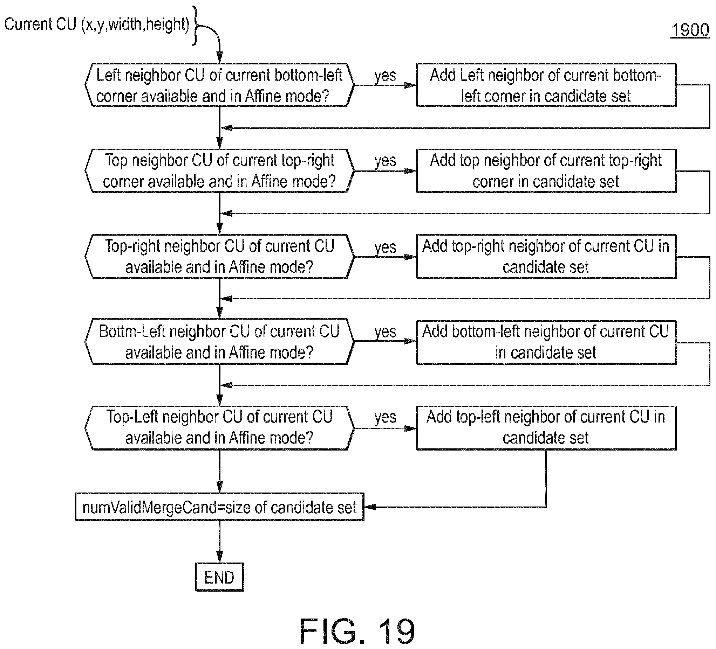

Once the process of FIG. 15 is done as shown at 1810 of FIG. 18, the process/syntax 1800 of FIG. 18, at 1820, computes the top-left and top-right corner CPMVs predicted from each candidate of the set provided at 1810. This process of 1820 is further detailed and illustrated by FIG. 19.

Again, FIG. 19 shows the detail of 1820 in FIG. 18 and includes a loop over each candidate determined and found from the preceding step (1810 of FIG. 18). For each Affine Merge predictor candidate, the CU that contains the spatial position of that candidate is determined. Then for each reference list L0 and L1 (in the base of a B slice), the control point motion vectors $\vec{v_0}$ and $\vec{v_1}$ useful to produce the current CU's motion field are derived according to Equation 2. These two CPMVs for each candidate are stored in the set of candidate CPMVs.

Once the process of FIG. 19 is done and the process is returned to FIG. 18, a loop 1830 over each Affine Merge predictor candidate is performed. It may select, for example, the CPMV candidate that leads to the lowest rate distortion cost. Inside the loop 1830 over each candidate, another loop 1840 which is similar to the process as shown on FIG. 14 is used to code the current CU with each CPMV candidate as explained before. The algorithm of FIG. 14 ends when all candidates have been evaluated, and its output may comprise the index of the best predictor. As indicated before, as an example, the candidate with the minimum rate distortion cost may be selected as the best predictor. Various embodiments use the best predictor to encode the current CU, and certain embodiments also encode an index for the best predictor.

One example of a determination of the rate distortion cost is defined as follows, as is well known to a person skilled in the art:

$$RD_{cost} = D + \lambda \times R$$

wherein D represents the distortion (typically an L2 distance) between the original block and a reconstructed block obtained by encoding and decoding the current CU with the considered candidate; R represents the rate cost, e.g. the number of bits generated by coding the current block with the considered candidate; $\lambda$ is the Lagrange parameter, which represents the rate target at which the video sequence is being encoded.

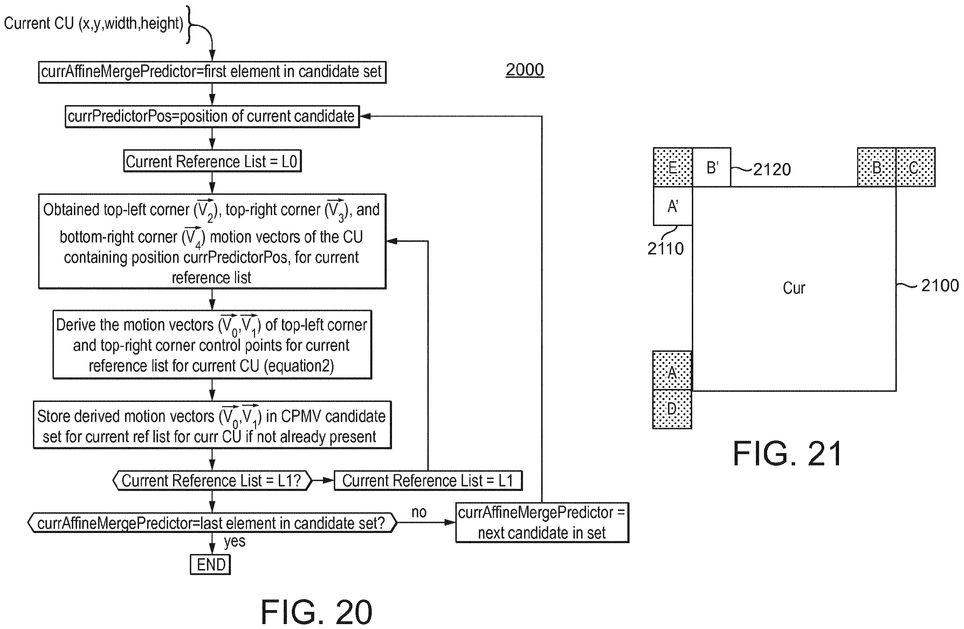

Another exemplary embodiment is described below. This exemplary embodiment aims at further improving the coding performance of the Affine Merge mode, by extending the set of Affine Merge candidates compared to the existing JEM. This exemplary embodiment may be executed both on the encoder and the decoder sides, in a similar manner, to extend the set of candidates. Accordingly, in one non-limiting aspect, some additional predictor candidates may be used to build the set of the multiple Affine Merge candidates. The additional candidates may be taken from additional spatial positions such as, e.g., A' 2110 and B' 2120 surrounding the current CU 2100 as illustrated in FIG. 21. Other embodiments use yet further spatial positions along, or in proximity to, one of the edges of the current CU 2100.

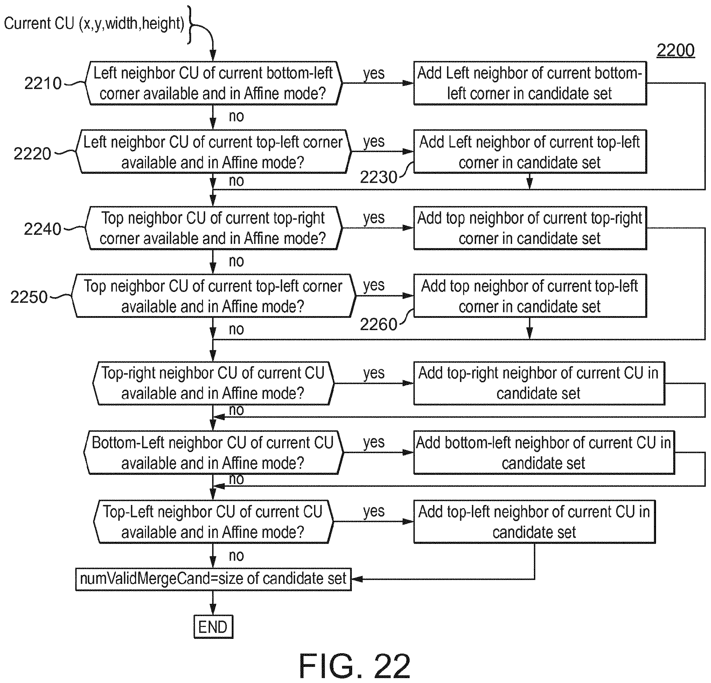

FIG. 22 illustrates an exemplary algorithm 2200 that corresponds to the embodiment of using the additional spatial positions A' 2110 and B' 2120 as shown in FIG. 21 and described above. For example, the algorithm 2200 includes testing the new candidate position A' if position A is not a valid Affine Merge prediction candidate (e.g., is not in a CU coded in Affine mode) at 2210 to 2230 of FIG. 22. Likewise, for example, it also tests the position B' if the position B does not provide any valid candidate (e.g., is not in a CU coded in Affine mode) at 2240 to 2260 of FIG. 22. The remaining aspects of the exemplary process 2200 to build a set of Affine Merge candidates are essentially unchanged compared to FIG. 19 as shown and explained before.

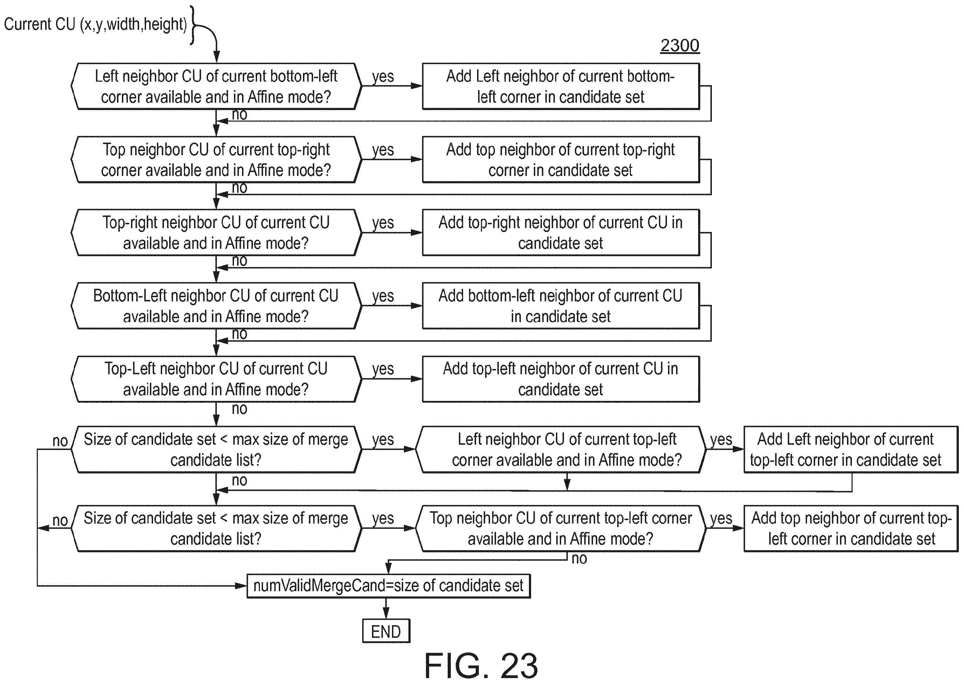

In another exemplary embodiment, existing merge candidate positions are considered first before evaluating newly added positions. The added positions are evaluated only if the set of candidates contains less candidates than a maximum number of merge candidate, for example, 5 or 7. The maximum number may be predetermined or be a variable. This exemplary embodiment is detailed by an exemplary algorithm 2300 of FIG. 23.

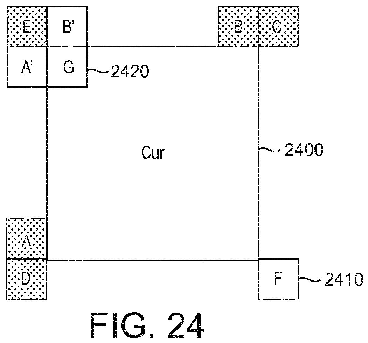

According to another exemplary embodiment, additional candidates, called temporal candidates, are added to the set of the predictor candidates. These temporal candidates may be used, for example, if no spatial candidates have been found as described above or, in a variant, if the size of the set of Affine Merge candidate has not reached a maximum value also as described before. Other embodiments use temporal candidates before adding spatial candidates to the set. For example, temporal candidates to predict the control point motion vectors of a current CU may be retrieved from one or more of the reference picture available or used for the current picture. The temporal candidates may be taken, for example, at positions corresponding to the bottom-right neighboring CU of the current CU in each of the reference pictures. This corresponds to the candidate position F 2410 for a current CU 2400 being encoded or decoded as shown in FIG. 24.

In an embodiment, for example, for each reference picture of each reference picture list, the affine flag associated with the block at position F 2410 of FIG. 24 in the considered reference picture is tested. If true, then the corresponding CU contained in that reference picture is added to the current set of Affine Merge candidates.

In a further variant, temporal candidates are retrieved from the reference pictures at the spatial position corresponding to the top-left corner of the current CU 2400. This position corresponds to the candidate position G 2420 of FIG. 24.

In a further variant, temporal candidates are retrieved from the reference pictures at the position corresponding to the bottom-right neighboring CU. Then, if the set of candidates contains less candidates than a prefixed maximum number of merge candidate, e.g., 5 or 7, the temporal candidates corresponding to the top-left corner G 2420 of the current CU are retrieved. In other embodiments, the temporal candidates are obtained from a position, in one or more reference pictures, corresponding to a different portion (other than G 2420) of the current CU 2400, or corresponding to another neighboring CU (other than F 2410) of the current CU 2400.

In addition, an exemplary derivation process for the control point motion vectors based on a temporal candidate proceeds as follows. For each temporal candidate contained in the constructed set, the block (tempCU) containing the temporal candidate in its reference picture is identified. Then the three CPMVs $\vec{v_2}$, $\vec{v_3}$, and $\vec{v_4}$ located at top-left, top-right and bottom-left corners of the identified temporal CU are scaled. This scaling takes into account the relationship between the POC (Picture Order Count) of tempCU, the POC of the reference picture of tempCU (difference is denoted tempDist), the POC of the current CU, and the POC of the reference picture of the current CU (difference is denoted curDist). For example, CPMVs can be scaled by the ratio between the distances (tempDist/curDist). Once these three scaled CPMVs are obtained, the two Control Point Motion Vectors for the current CU are derived according to Equation 2 as described before.

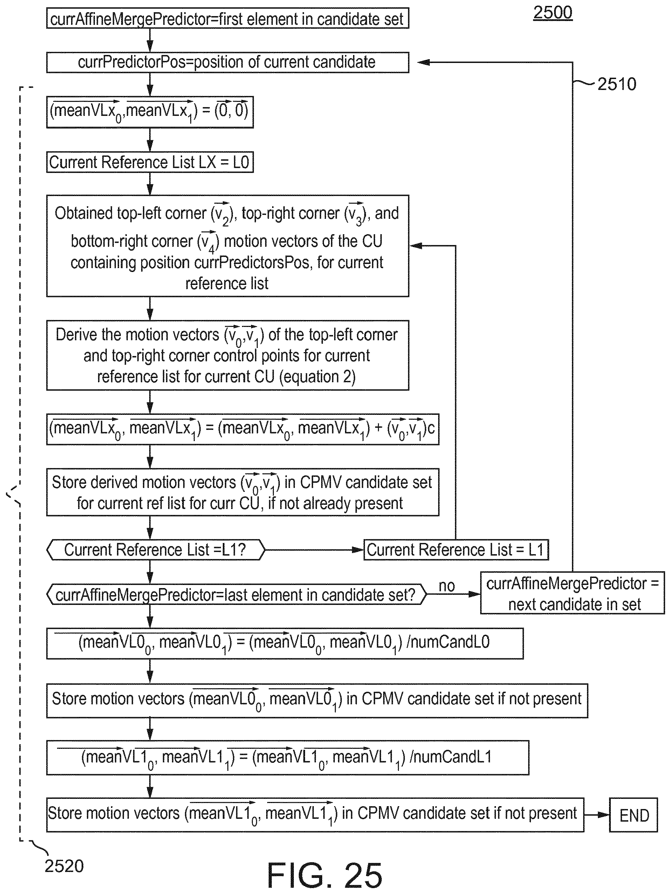

Another exemplary embodiment includes adding a mean Control Point Motion Vector pair computed as a function of the control point motion vectors derived from each candidate. The exemplary process here is detailed by an exemplary algorithm 2500 shown in FIG. 25. A loop 2510 is used for each Affine Merge predictor candidate in the set constructed for the considered reference picture list.

Then at 2520, for each reference picture list Lx, successively equal to L0 and then L1 (if in a B slice), if the current candidate has valid CPMVs for list Lx:

- Initialize the pair of motion vectors $(\overrightarrow{meanVLx_0}, \overrightarrow{meanVLx_1})$ to $(\vec{0}, \vec{0})$
- For each candidate

    - derive the CPMV $(\vec{v_0}, \vec{v_1})$ from current candidate CPMVs according to Equation 2.
    - add $(\vec{v_0}, \vec{v_1})$ to the pair $(\overrightarrow{meanVLx_0}, \overrightarrow{meanVLx_1})$;

- divide the pair of motion vectors $(\overrightarrow{meanVLx_0}, \overrightarrow{meanVLx_1})$ by the number of candidates for list Lx;
- assign the reference picture index to the motion vectors $\overrightarrow{meanVLx_0}$ and $\overrightarrow{meanVLx_1}$, equal to the minimum reference picture index among all candidates of each list respectively (The vector $\overrightarrow{meanVLx_0}$ refers to list0 and its associated reference index is set to the minimum reference index observed among all the candidates in list 0. The vector $\overrightarrow{meanVLx_1}$ is the same, except applied to list1.);
- add the obtained mean pair of motion vectors $(\overrightarrow{meanVLx_0}, \overrightarrow{meanVLx_1})$ to the set of candidate CPMVs to generate the affine motion field of current CU for list Lx.

Using the algorithm 2500 and/or other embodiments, the set of Affine Merge candidates is being further enriched, and contains the mean motion information computed from the CPMV derived for each candidate inserted into the set of candidates, according to the previous embodiments as described in the preceding sections.

Because it is possible that several candidates lead to the same CPMV for the current CU, the above mean candidate may result in a weighted average pair of CPMV motion vectors. Indeed, the process described above would compute the average of the CPMVs collected so far, regardless of their uniqueness in the complete set of CPMVs. Therefore, a variant of this embodiment consists in adding again another candidate to the set of CPMV prediction candidates. It consists in adding the average CPMV of the set of unique collected CPMVs (apart from the weighted mean CPMV as described above). This provides a further candidate CPMV in the set of the predictor candidates to produce the Affine Motion field of the current CU.

For example, consider the situation in which the following five spatial candidates are all available and affine (L, T, TR, BL, TL). However, the 3 left positions (L, BL, TL) are within the same neighboring CU. In each spatial position, we can get candidate CPMVs. Then, the first mean is equal to the sum of these 5 CPMVs divided by 5 (even though several are identical). In the second mean, only different CPMVs are considered, so the 3 left ones (L, BL, TL) are only considered once and the second mean is equal to the 3 different CPMVs (L, T, TR) divided by 3. In the first mean, redundant CPMVs are added 3 times which gives more weight to the redundant CPMVs. Using equations, we may write that mean1 = (L+ T+ TR+ BL+ TL)/5 with L=BL=TL so mean1=(3*L+ T+ TL)/5, while mean2=(L+ T+ TL)/3.

The two previously described candidate means are bi-directional as soon as a considered candidate holds a motion vector for a reference image in list 0 and another in list 1. In another variant, it is possible to add uni-directional means. From the weighted and the unique mean, four uni-directional candidates may be constructed by picking motion vectors from list 0 and list 1 independently.

One advantage of the exemplary candidate set extension methods described in this application is an increase in the variety in the set of candidate Control Point Motion Vectors that may be used to construct the affine motion field associated with a given CU. Thus, the present embodiments provide technological advancement in the computing technology of video content encoding and decoding. For example, the present embodiments improve the rate distortion performance provided by the Affine Merge coding mode in JEM. This way, the overall rate distortion performance of the considered video codec has been improved.

A further exemplary embodiment may be provided to modify the process of FIG. 18. The embodiment includes a fast evaluation of the performance of each CPMV candidate, through the following approximate distortion and rate computation. Accordingly, for each candidate in the set of CPMVs, the motion field of current CU is computed, and the 4x4 sub-block-based temporal prediction of the current CU is performed. Next the distortion is computed as the SATD between the predicted CU and the original CU. The rate cost is obtained as an approximated number of bits linked to the signaling of the merge index of a considered candidate. A rough (approximate) RD cost is then obtained for each candidate. The final selection is based on the approximate RD cost in one embodiment. In another embodiment, a subset of candidates undergo the full RD search, i.e. candidates that have the lowest approximate RD cost then undergo the full RD search. The advantage of these embodiments is that they limit the encoder-side complexity increase that arises from the search for the best Affine Merge predictor candidate.

Also, according to another general aspect of at least one embodiment, the Affine Inter mode as described before may also be improved with all of the current teachings presented herewith by having an extended list of Affine predictor candidates. As described above in connection with FIG. 8A, one or more CPMVPs of an Affine Inter CU are derived from neighboring motion vectors regardless of their coding mode. Therefore, it is then possible to take advantage of the affine neighbors with their affine model to construct the one or more CPMVPs of the current Affine Inter CU, as in Affine Merge mode as described before. In that case, the considered affine candidates may be the same list as described above for Affine Merge mode (e.g., not limited to only spatial candidates).

Accordingly, a set multiple predictor candidates are provided to improve compression/decompression being provided by the current HEVC and JEM by using better predictor candidates. The process will be more efficient and coding gain will be observed even if it may be needed to transmit a supplemental index.

According to a general aspect of at least one embodiment, the set of Affine Merge candidates (with at least 7 candidates as in Merge mode) is composed of, e.g.:

- Spatial candidates from (A, B, C, D, E),

- Temporal candidates of the bottom-right co-located position if less than 5 candidates in the list,

- Temporal candidates of the co-located position if less than 5 candidates in the list,

- Weighted mean

- Unique mean

- Uni-directional means from weighted mean if weighted mean is bi-directional and if less than 7 candidates in the list,

- Uni-directional means from unique mean if unique mean is bi-directional and if less than 7 candidates in the list.

Also, in the AMVP case, predictor candidates may be taken from, e.g.:

- Spatial candidates from set (A, B, C, D, E),

- Supplemental spatial candidates from (A', B'),

- Temporal candidates of the bottom-right co-located position.

TABLE 1 and TABLE 2 below show the improvements over JEM 4.0 (parallel) using exemplary embodiments of some of the present proposed solutions. Each table shows the results of the amounts of rate reductions for one of the exemplary embodiments as described above. In particular, TABLE 1 shows the improvements when the 5 spatial candidates (A, B, C, D, E) shown in FIG. 8B are used as the set of the multiple predictor candidates according to an exemplary embodiment described above. TABLE 2 shows the improvements for an exemplary embodiment when the following order of the predictor candidates is used as described above: spatial candidates first, then temporal candidates if the number of candidates is still less than 5, then means, and finally uni-directional means if the number of candidates is still less than 7. Accordingly, for example, TABLE 2 shows that for this embodiment, the rate reductions for Y, U, V samples are respectively 0.22%, 0.26%, and 0.12% BD (Bjøntegaard-Delta) rate reductions for Class D, with almost no increase in the encoding and decoding running times (i.e., 100% and 101% respectively). Thus, the present exemplary embodiments improve the compression/decompression efficiency while maintaining the computational complexity cost over the existing JEM implementations.

**TABLE 1. Results of RDO selection of the best CPMV using spatial candidates over JEM 4.0**

| | Random Access Main 10 | | | | |
|---|---|---|---|---|---|
| | Over JEM4.0 (parallel) | | | | |
| | Y | U | V | EncT | DecT |
| Class C | -0.04% | 0.09% | -0.12% | 100% | 100% |
| Class D | -0.07% | -0.20% | -0.11% | 100% | 100% |

**TABLE 2. Results of RDO selection of the best CPMV using spatial, temporal, means and then uni-directional means candidates over JEM 4.0**

| | Random Access Main 10 | | | | |
|---|---|---|---|---|---|
| | Over JEM 4.0 (parallel) | | | | |
| | Y | U | V | EncT | DecT |
| Class C | -0.15% | 0.02% | -0.12% | 100% | 101% |
| Class D | -0.22% | -0.26% | -0.12% | 100% | 101% |

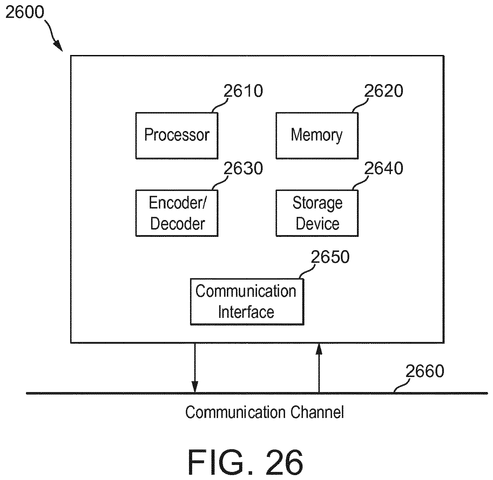

FIG. 26 illustrates a block diagram of an exemplary system 2600 in which various aspects of the exemplary embodiments may be implemented. The system 2600 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. The system 2600 may be communicatively coupled to other similar systems, and to a display via a communication channel as shown in FIG. 26 and as known by those skilled in the art to implement all or part of the exemplary video systems described above.

Various embodiments of the system 2600 include at least one processor 2610 configured to execute instructions loaded therein for implementing the various processes as discussed above. The processor 2610 may include embedded memory, input output interface, and various other circuitries as known in the art. The system 2600 may also include at least one memory 2620 (e.g., a volatile memory device, a non-volatile memory device). The system 2600 may additionally include a storage device 2640, which may include non-volatile memory, including, but not limited to, EEPROM, ROM, PROM, RAM, DRAM, SRAM, flash, magnetic disk drive, and/or optical disk drive. The storage device 2640 may comprise an internal storage device, an attached storage device, and/or a network accessible storage device, as non-limiting examples. The system 2600 may also include an encoder/decoder module 2630 configured to process data to provide encoded video and/or decoded video, and the encoder/decoder module 2630 may include its own processor and memory.

The encoder/decoder module 2630 represents the module(s) that may be included in a device to perform the encoding and/or decoding functions. As is known, such a device may include one or both of the encoding and decoding modules. Additionally, the encoder/decoder module 2630 may be implemented as a separate element of the system 2600 or may be incorporated within one or more processors 2610 as a combination of hardware and software as known to those skilled in the art.

Program code to be loaded onto one or more processors 2610 to perform the various processes described hereinabove may be stored in the storage device 2640 and subsequently loaded onto the memory 2620 for execution by the processors 2610. In accordance with the exemplary embodiments, one or more of the processor(s) 2610, the memory 2620, the storage device 2640, and the encoder/decoder module 2630 may store one or more of the various items during the performance of the processes discussed herein above, including, but not limited to the input video, the decoded video, the bitstream, equations, formulas, matrices, variables, operations, and operational logic.

The system 2600 may also include a communication interface 2650 that enables communication with other devices via a communication channel 2660. The communication interface 2650 may include, but is not limited to a transceiver configured to transmit and receive data from the communication channel 2660. The communication interface 2650 may include, but is not limited to, a modem or network card and the communication channel 2650 may be implemented within a wired and/or wireless medium. The various components of the system 2600 may be connected or communicatively coupled together (not shown in FIG. 26) using various suitable connections, including, but not limited to internal buses, wires, and printed circuit boards.

The exemplary embodiments may be carried out by computer software implemented by the processor 2610 or by hardware, or by a combination of hardware and software. As a non-limiting example, the exemplary embodiments may be implemented by one or more integrated circuits. The memory 2620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 2610 may be of any type appropriate to the technical environment, and may encompass one or more of microprocessors, general purpose computers, special purpose computers, and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Furthermore, one skilled in the art may readily appreciate that the exemplary HEVC encoder 100 shown in FIG. 1 and the exemplary HEVC decoder shown in FIG. 3 may be modified according to the above teachings of the present disclosure in order to implement the disclosed improvements to the exiting HEVC standards for achieving better compression/decompression. For example, entropy coding 145, motion compensation 170, and motion estimation 175 in the exemplary encoder 100 of FIG. 1, and entropy decoding 330, and motion compensation 375, in the exemplary decoder of FIG. 3 may be modified according to the disclosed teachings to implement one or more exemplary aspects of the present disclosure including providing an enhanced affine merge prediction to the existing JEM.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for video encoding, comprising:

   determining, for a block being encoded in a picture, a set of predictor candidates having multiple predictor candidates;

   selecting a predictor candidate from the set of predictor candidates;

   determining for the selected predictor candidate from the set of predictor candidates, one or more corresponding control point motion vectors for the block;

   determining for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded;

   encoding the block based on the corresponding motion field for the selected predictor candidate from the set of predictor candidates; and

   encoding an index for the selected predictor candidate from the set of predictor candidates.

2. A method for video decoding, comprising:

   receiving, for a block being decoded in a picture, an index corresponding to a particular predictor candidate;

   determining, for the particular predictor candidate, one or more corresponding control point motion vectors for the block being decoded;

   determining for the particular predictor candidate, based on the one or more corresponding control point motion vectors, a corresponding motion field based on a motion model, wherein the corresponding motion field identifies motion vectors used for prediction of sub-blocks of the block being decoded; and

   decoding the block based on the corresponding motion field.

3. An apparatus for video encoding, comprising:

   means for determining, for a block being encoded in a picture, a set of predictor candidates having multiple predictor candidates;

   means for selecting a predictor candidate from the set of predictor candidates;

   means for determining for the selected predictor candidate from the set of predictor candidates, one or more corresponding control point motion vectors for the block;

   means for determining for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded;

   means for encoding the block based on the corresponding motion field for the selected predictor candidate from the set of predictor candidates; and

   means for encoding an index for the selected predictor candidate from the set of predictor candidates.

4. An apparatus for video decoding, comprising:

   means for receiving, for a block being decoded in a picture, an index corresponding to a particular predictor candidate;

   means for determining, for the particular predictor candidate, one or more corresponding control point motion vectors for the block being decoded;

   means for determining for the particular predictor candidate, based on the one or more corresponding control point motion vectors, a corresponding motion field based on a motion model, wherein the corresponding motion field identifies motion vectors used for prediction of sub-blocks of the block being decoded; and

   means for decoding the block based on the corresponding motion field.

5. The encoding method of claim 1, further comprising:

   evaluating the multiple predictor candidates according to one or more criteria and based on the corresponding motion field for each of the multiple predictor candidates; and

   selecting the predictor candidate from the multiple predictor candidates based on the evaluating.

6. The encoding apparatus of claim 3, further comprising:

   means for evaluating the multiple predictor candidates according to one or more criteria and based on the corresponding motion field for each of the multiple predictor candidates; and
   means for selecting the predictor candidate from the multiple predictor candidates based on the evaluating.

7. The method or the apparatus according to claims 5 to 6, wherein the one or more criteria is based on a rate distortion determination corresponding to one or more of the multiple predictor candidates from the set of predictor candidates.

8. The method or the apparatus according to any one of claims 1 to 7, wherein the decoding or encoding the block based on the corresponding motion field comprises decoding or encoding, respectively, based on predictors for the sub-blocks, the predictors being indicated by the motion vectors.

9. The method or the apparatus of any preceding claims, wherein the set of predictor candidates comprises spatial candidates, and/or temporal candidates, of the block being encoded or decoded.

10. The method or the apparatus according to any of the preceding claims wherein the motion model is an affine model.

11. The method or the apparatus according to any of the preceding claims wherein the corresponding motion field for each position (x, y) inside the block being encoded or decoded is determined by:

$$
\begin{cases}
v_x = \dfrac{(v_{1x} - v_{0x})}{w} x - \dfrac{(v_{1y} - v_{0y})}{w} y + v_{0x} \\
v_y = \dfrac{(v_{1y} - v_{0y})}{w} x + \dfrac{(v_{1x} - v_{0x})}{w} y + v_{0y}
\end{cases}
$$

wherein $(v_{0x}, v_{0y})$ and $(v_{1x}, v_{1y})$ are the control point motion vectors used to generate the corresponding motion field, $(v_{0x}, v_{0y})$ corresponds to the control point motion vector of the top-left corner of the block being encoded or decoded, $(v_{1x}, v_{1y})$ corresponds to the control point motion vector of the top-right corner of the block being encoded or decoded and w is the width of the block being encoded or decoded.

12. The method or apparatus of any preceding claims, wherein one or more additional control point motion vectors are added for the determining of the corresponding motion field based on a function of the determined one or more corresponding control point motion vectors.

13. A non-transitory computer readable medium containing data content generated according to the method or the apparatus of any of the preceding claims.

14. A signal comprising video data generated according to the method or the apparatus of any of the preceding claims.

15. A computer program product comprising instructions for performing the method of any of the preceding claims when executed by one of more processors.

FIG. 1

FIG. 2A

FIG. 2B

300

FIG. 3

FIG. 4

Slice

FIG. 5

FIG. 6

$\overrightarrow{V_0}$　　　　$\overrightarrow{V_1}$

~700

# FIG. 7

| A | B |
| C | V0 |

| D | E |
| V1 | |

Cur

~800

| E |

| B | C |

Cur

~880

| A |
| D |

# FIG. 8A　　　　　FIG. 8B

$(X_0=Y_0)$ $\vec{V_0}$

$(X_1=Y_1)$ $\vec{V_1}$

910

$(X_2=Y_2)$ $\vec{V_2}$

$(X_3=Y_3)$ $\vec{V_3}$

Cur

$\vec{V_4}$

$(X_4=Y_4)$

A

900

FIG. 9

1000

determining, for a block being encoded in a picture, a set of predictor candidates having multiple predictor candidates ∼1010

selecting a predictor candidate from the set of predictor candidates ∼1020

determining for the selected predictor candidate from the set of predictor candidates, one or more corresponding control point motion vectors for the block ∼1030

determining for the selected predictor candidate, based on the one or more corresponding control point motion vectors, a corresponding motion field based on a motion model for the selected predictor candidate, wherein the corresponding motion field identifies motion vectors used for prediction of sub-blocks of the block being encoded ∼1040

encoding the block based on the corresponding motion field for the selected predictor candidate from the set of predictor candidates ∼1050

encoding an index for the selected predictor candidate from the set of predictor candidates ∼1060

## FIG. 10

<u>1100</u>

determining, for a block being encoded in a picture, a set of predictor candidates ~1110

determining for each of multiple predictor candidates from the set of predictor candidates, one or more corresponding control point motion vectors for the block ~1120

determining for each of the multiple predictor candidates, based on the one or more corresponding control point motion vectors, a corresponding motion field based on a motion model for the each of the multiple predictor candidates from the set of predictor candidates ~1130

evaluating the multiple predictor candidates according to one or more criteria and based on the corresponding motion field ~1140

selecting a predictor candidate from the multiple predictor candidates based on the evaluating ~1150

encoding the block based on the selected predictor candidate from the set of predictor candidates ~1160

FIG. 11

<u>1200</u>

receiving, for a block being decoded in a picture, an index corresponding to a particular predictor candidate ~1210

determining, for the particular predictor candidate, one or more corresponding control point motion vectors for the block being decoded ~1220

determining for the particular predictor candidate, based on the one or more corresponding control point motion vectors, a corresponding motion field based on a motion model, wherein the corresponding motion field identifies motion vectors used for prediction of sub-blocks of the block being decoded ~1230

decoding the block based on the corresponding motion field ~1240

# FIG. 12

<u>1300</u>

retrieving, for a block being decoded in a picture, an index corresponding to a selected predictor candidate, wherein the selected predictor candidate is selected at an encoder by: determining, for a block being encoded in a picture, a set of predictor candidates; determining for each of multiple predictor candidates from the set of predictor candidates, one or more corresponding control point motion vectors for the block being encoded; determining for each of the multiple predictor candidates, based on the one or more corresponding control point motion vectors, a corresponding motion field based on a motion model for the each of the multiple predictor candidates from the set of predictor candidates; evaluating the multiple predictor candidates according to one or more criteria and based on the corresponding motion field; selecting a predictor candidate from the multiple predictor candidates based on the evaluating encoding an index for the selected predictor candidate from the set of predictor candidates

~1310

decoding the block based on the index corresponding to the selected predictor candidate ~1320

# FIG. 13

Current CU (x,y,width,height) }——⟍ 1400

1401

Obtain Affine Merge CPMV ⟍1410

Compute Affine Motion Field for Current CU ⟍1420

Motion Compensated Prediction of Current CU ⟍1430

Sub-block OBMC ⟍1440

noResidual=0 ⟍1450

1460

Encode Residual in current noResidential mode Calcul RD cost

Replace best by current Inter Mode
bestRDCost=currRDCost ◄—— currRDCost < best RDCost?

noResidual=1? ——yes——► noResidual++

yes

END

# FIG. 14

Current CU (x,y,width,height)

1500

| Left neighbor CU of current bottom-left corner available and in Affine mode? | → yes → | Selected Merge Affine Predictor Position = Left |

no ↓

| Top neighbor CU of current top-right corner available and in Affine mode? | → yes → | Selected Merge Affine Predictor Position = Top |

no ↓

| Top-right neighbor CU of current CU available and in Affine mode? | → yes → | Selected Merge Affine Predictor Position = Top-Right |

no ↓

| Bottom-Left neighbor CU of current CU available and in Affine mode? | → yes → | Selected Merge Affine Predictor Position = Bottom-Left |

no ↓

| Top-Left neighbor CU of current CU available and in Affine mode? | → yes → | Selected Merge Affine Predictor Position = Top-Left |

no ↓

numValidMergeCand=0

Derive top-left and top-right CPMV for from selected merge affine predictor

numValidMergeCand=1

END

FIG. 15

FIG. 16

FIG. 17

Current CU (x,y,width,height) → Obtain Set of Valid Affine Merge Predictors ~1810

1801

Derive top-left and top-right corner CPMVs from set of Valid Affine Merge Predictors ~1820

noResidual=0

1830                                                                                          1800

currAffineMergePredictor=first element in candidate set

noResidual=0

Compute Affine Motion Field for Current CU

Motion Compensated Prediction of Current CU

Sub-block OBMC                                                     ~1840

Encode Residual in current noResidual mode and Calcul RD cost

Replace best by current Inter Mode  ← yes ← currRDCost < bestRDCost ?
bestRDCost=currRDCost

no

currAffineMergePredictor = last element in candidate set? — no → currAffineMergePredictor =
                                                                      next candidate in set

yes

noResidual = 1? — yes → noResidual++

no

END

FIG. 18

EP 3 422 720 A1

Current CU (x,y,width,height) 1900

| Left neighbor CU of current bottom-left corner available and in Affine mode? | yes → | Add Left neighbor of current bottom-left corner in candidate set |

| Top neighbor CU of current top-right corner available and in Affine mode? | yes → | Add top neighbor of current top-right corner in candidate set |

| Top-right neighbor CU of current CU available and in Affine mode? | yes → | Add top-right neighbor of current CU in candidate set |

| Bottm-Left neighbor CU of current CU available and in Affine mode? | yes → | Add bottom-left neighbor of current CU in candidate set |

| Top-Left neighbor CU of current CU available and in Affine mode? | yes → | Add top-left neighbor of current CU in candidate set |

numValidMergeCand=size of candidate set

END

FIG. 19

Current CU (x,y,width,height)

2000

currAffineMergePredictor=first element in candidate set

currPredictorPos=position of current candidate

Current Reference List = L0

Obtained top-left corner ($\overrightarrow{V_2}$), top-right corner ($\overrightarrow{V_3}$), and bottom-right corner ($\overrightarrow{V_4}$) motion vectors of the CU containing position currPredictorPos, for current reference list

Derive the motion vectors ($\overrightarrow{V_0},\overrightarrow{V_1}$) of top-left corner and top-right corner control points for current reference list for current CU (equation2)

Store derived motion vectors ($\overrightarrow{V_0},\overrightarrow{V_1}$) in CPMV candidate set for current ref list for curr CU if not already present

Current Reference List = L1? → Current Reference List = L1

currAffineMergePredictor=last element in candidate set? → no → currAffineMergePredictor = next candidate in set

yes

END

FIG. 20

E | B' ~2120    B | C

A'

2110

Cur    ~2100

A

D

FIG. 21

Current CU (x,y,width,height)

2200

2210 → Left neighbor CU of current bottom-left corner available and in Affine mode? — yes → Add Left neighbor of current bottom-left corner in candidate set

no

2220 → Left neighbor CU of current top-left corner available and in Affine mode? — yes → Add Left neighbor of current top-left corner in candidate set

2230

no

2240 → Top neighbor CU of current top-right corner available and in Affine mode? — yes → Add top neighbor of current top-right corner in candidate set

no

2250 → Top neighbor CU of current top-left corner available and in Affine mode? — yes → Add top neighbor of current top-left corner in candidate set

2260

no

Top-right neighbor CU of current CU available and in Affine mode? — yes → Add top-right neighbor of current CU in candidate set

no

Bottom-Left neighbor CU of current CU available and in Affine mode? — yes → Add bottom-left neighbor of current CU in candidate set

no

Top-Left neighbor CU of current CU available and in Affine mode? — yes → Add top-left neighbor of current CU in candidate set

no

numValidMergeCand=size of candidate set

END

FIG. 22

Current CU (x,y,width,height)

2300

| Left neighbor CU of current bottom-left corner available and in Affine mode? | —yes→ | Add Left neighbor of current bottom-left corner in candidate set |

no

| Top neighbor CU of current top-right corner available and in Affine mode? | —yes→ | Add top neighbor of current top-right corner in candidate set |

no

| Top-right neighbor CU of current CU available and in Affine mode? | —yes→ | Add top-right neighbor of current CU in candidate set |

no

| Bottom-Left neighbor CU of current CU available and in Affine mode? | —yes→ | Add bottom-left neighbor of current CU in candidate set |

no

| Top-Left neighbor CU of current CU available and in Affine mode? | —yes→ | Add top-left neighbor of current CU in candidate set |

no

no ← | Size of candidate set < max size of merge candidate list? | —yes→ | Left neighbor CU of current top-left corner available and in Affine mode? | —yes→ | Add Left neighbor of current top-left corner in candidate set |

no

no ← | Size of candidate set < max size of merge candidate list? | —yes→ | Top neighbor CU of current top-left corner available and in Affine mode? | —yes→ | Add top neighbor of current top-left corner in candidate set |

no

numValidMergeCand=size of candidate set

END

FIG. 23

EP 3 422 720 A1

FIG. 24

2500

currAffineMergePredictor=first element in candidate set

currPredictorPos=position of current candidate

2510

$(\overrightarrow{meanVLx_0}, \overrightarrow{meanVLx_1}) = (\overrightarrow{0}, \overrightarrow{0})$

Current Reference List LX = L0

Obtained top-left corner $(\overrightarrow{v_2})$, top-right corner $(\overrightarrow{v_3})$, and bottom-right corner $(\overrightarrow{v_4})$ motion vectors of the CU containing position currPredictorsPos, for current reference list

Derive the motion vectors $(\overrightarrow{v_0}, \overrightarrow{v_1})$ of the top-left corner and top-right corner control points for current reference list for current CU (equation 2)

$(\overrightarrow{meanVLx_0}, \overrightarrow{meanVLx_1}) = (\overrightarrow{meanVLx_0}, \overrightarrow{meanVLx_1}) + (\overrightarrow{v_0}, \overrightarrow{v_1})c$

Store derived motion vectors $(\overrightarrow{v_0}, \overrightarrow{v_1})$ in CPMV candidate set for current ref list for curr CU, if not already present

Current Reference List =L1? ──→ Current Reference List = L1

currAffineMergePredictor=last element in candidate set? ──no──→ currAffineMergePredictor = next candidate in set

$(\overrightarrow{meanVL0_0}, \overrightarrow{meanVL0_1}) = (\overrightarrow{meanVL0_0}, \overrightarrow{meanVL0_1})$ /numCandL0

Store motion vectors $(\overrightarrow{meanVL0_0}, \overrightarrow{meanVL0_1})$ in CPMV candidate set if not present

$(\overrightarrow{meanVL1_0}, \overrightarrow{meanVL1_1}) = (\overrightarrow{meanVL1_0}, \overrightarrow{meanVL1_1})$ /numCandL1

Store motion vectors $(\overrightarrow{meanVL1_0}, \overrightarrow{meanVL1_1})$ in CPMV candidate set if not present ──→ END

2520

FIG. 25

2600

2610

Processor

2620

Memory

2630

Encoder/
Decoder

2640

Storage
Device

2650

Communication
Interface

2660

Communication Channel

# FIG. 26

Europäisches Patentamt
European Patent Office
Office européen des brevets

# EUROPEAN SEARCH REPORT

Application Number
EP 17 30 5797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br>Y | HAN HUANG ET AL: "Affine SKIP and DIRECT modes for efficient video coding", VISUAL COMMUNICATIONS AND IMAGE PROCESSING (VCIP), 2012 IEEE, IEEE, 27 November 2012 (2012-11-27), pages 1-6, XP032309255, DOI: 10.1109/VCIP.2012.6410841 ISBN: 978-1-4673-4405-0<br>* abstract *<br>* right-hand column on page 1, penultimate paragraph *<br>* sections 3.1 and 3.3; figure 1 *<br>----- | 1-10, 12-15<br><br><br><br><br><br><br><br>11 | INV.<br>H04N19/567<br>H04N19/537<br>H04N19/52 |
| Y<br><br><br><br><br><br><br><br><br>A | SIXIN LIN ET AL: "Affine transform prediction for next generation video coding;C1016 R1", ITU-T DRAFT ; STUDY PERIOD 2013-2016, INTERNATIONAL TELECOMMUNICATION UNION, GENEVA ; CH, vol. 6/16, 30 September 2015 (2015-09-30), pages 1-11, XP044149659, [retrieved on 2015-09-30]<br>* sections 2.1, 2.2, 2.3.2; figures 2,3,5 *<br>----- | 11<br><br><br><br><br><br><br><br><br>1-10, 12-15 | TECHNICAL FIELDS SEARCHED (IPC)<br>H04N |
| A | CHEN J ET AL: "Algorithm description of Joint Exploration Test Model 6 (JEM6)", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F1001, 31 May 2017 (2017-05-31), XP030150793,<br>* section 2.3.6; figures 16-19 *<br>----- | 1-15 | |

The present search report has been drawn up for all claims

2

| Place of search | Date of completion of the search | Examiner |
|---|---|---|
| The Hague | 18 December 2017 | La, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)